# EUROPEAN PATENT SPECIFICATION

(11) **EP 2 096 019 B1**
(45) Date of publication and mention of the grant of the patent: **16.02.2011**
(21) Application number: 08152090.0
(22) Date of filing: 28.02.2008
(51) Int. Cl.: B62D 21/15, B62D 25/20

(54) **Bracket assembly**
Haltebügel-Baugruppe
Ensemble support

(43) Date of publication of application: 02.09.2009
(73) Proprietor: Ford Global Technologies, LLC, Dearborn, MI 48126 (US)
(72) Inventor: Boström, Mikael, 424 50, Angered (SE); Ljungquist, Henrik, 423 36, Torslanda (SE); Nedic, Stevan, 416 70, Göteborg (SE); Utbult, Thomas, 436 30, Landvetter (SE)
(74) Representative: Ekwall, Peter

(56) References cited:
- DE-A1-102004 058 993
- JP-A- 8 276 866
- JP-A- 10 129 523
- JP-A- 11 180 347

## Description

### TECHNICAL FIELD

The present invention relates to a bracket assembly for a passenger car adapted to improve the static and dynamic stiffness of the passenger car body. The bracket assembly is especially useful for passenger cars of the station wagon type, e.g. estate cars, station wagons, mini-vans, SUV's and the like.

### BACKGROUND ART

There are different types of passenger cars. One thing in common for all types is the desire to provide the vehicle with a sufficiently stiff car body. One region in which this is important is in the region of the C-pillar. The region at the C-pillar differs between sedan or saloon cars and station wagons or estate cars, i.e. between cars having a fixed parcel shelf and cars having a removable or none parcel shelf. In the sedan or saloon car type, the fixed parcel shelf structure is used as a stabilising element in order to stiffen the body at the region of the C-pillar. This, together with the rear window structure and the trunk structure helps to stiffen the rear of the car body.

For cars of the station wagon type, that does not have a fixed parcel shelf and at the same time are equipped with a large rear opening, the stiffening of the car body is more difficult. Because of the windows of the car, the stabilising structure of the car body comprises a few main elements, which are located at the positions of the pillars, i.e. the windshield support structure of the car. For the rear of the car, the stabilising structure of the C-pillar is of great importance. This stabilising structure, running around the complete car body, is often referred to as the C-ring.

The C-ring may comprise a transverse cross member incorporated with the floor of the body, side members extending from the floor to the roof in conjunction with the C-pillar and a cross member incorporated with the roof. Such a structure will help to stabilise the car body. However, due to design criteria and production reasons, there are some problems to achieve a rigid and stiff joint between the floor member and the side members.

In the production plant, a car body is assembled such that the floor module is first completed and the side modules of the body are thereafter positioned and joined to the floor module. In this process, the connection between the floor member and the side members of the C-ring has to be joined in a stiff and load-carrying way. At the same time, there are restrictions on the size of the joining bracket and the members in the joint area.

Different methods and means for joining the side members to the floor member, i.e. the side modules to the floor module, are used in the automotive industry. It is common to use some kind of more or less U-shaped profile member in the side module and to join this to a correspondingly shaped member fixed to the floor module. The joint means used are either arc welding or bolts. These means are used since they allow some compensation of tolerances between the side members and floor member. A further reason for using these methods is that they allow a one-sided access, i.e. the bolt can be fastened from the outside of the members, and the arc weld can be applied from the outside of the members. Both arc welding and bolting are however time consuming and expensive methods.

Due to inherent deviations in the exact mounting position of the side member on the side module, of the floor member on the floor module, and also of the positioning of the side module in relation to the floor module, it is difficult to obtain a close fit between the floor member and the side member, since it will be impossible to fit two corresponding U-profile members to one another due to the tolerances. This makes it difficult to obtain a stiff, load carrying joint in a cheap and reliable way. Because of the tolerances, the joint has to be over-dimensioned so that the worst case joint is still stiff enough to meet the specifications of the car body. This may be the case when only one of the legs of a U-profile can be used to join the side member with the floor member. In the known solutions, both the side member and/or the corresponding floor member are fixed to the wheel housing in order to improve the stiffness of the joint.

The described known means and methods for joining the C-ring members are thus ineffective, time-consuming and costly. There is for this reason room for improvements of the joint between the side module and the floor module in the C-ring region.

JP 11 180347 A 2 describes a support structure for a rear suspension support of a car. The support structure comprises a closed section front pillar member 22 comprising an upper and a lower member and a closed section rear pillar member 24 comprising an upper and a lower member. Both the upper pillar members and the lower pillar members are made up from brackets combined with body parts of the car. In this way, a rigid suspension support is obtained.

DE 10 2004 058993 A1 shows a reinforcement structure for a front suspension of a car. The reinforcement structure comprises two reinforcement brackets that are to be welded to the suspension bracket, to the main chassis beam and to the auxiliary chassis beam. The reinforcement structure is designed to be as stiff as possible.

### SUMMARY OF THE INVENTION

An object of the invention is therefore to provide a bracket assembly for a passenger car for the connection of the floor module to a side module that is stiff in a direction perpendicular to the driving direction of the car, and that is weak in the driving direction of the car. A further object of the invention is to provide a bracket assembly that can be spot-welded to the side module and the floor module. A further object of the invention is to provide a bracket assembly that is light-weight. A further object of the invention is to provide a method for mounting a side module to the floor module of the car body.

With a bracket assembly for a passenger car, comprising a lower attachment section adapted to be fixedly joined to the floor module of the car body and an upper attachment section adapted to be fixedly joined to a side module of the car body, where the upper attachment section is adapted to be joined to the side module by joints in a plane substantially perpendicular to the driving direction of the car, the object of the invention is achieved in that the bracket assembly comprises a front bracket and a rear bracket.

By this first embodiment of the bracket assembly according to the invention, a bracket assembly is provided, which allows a side module of a passenger car to be mounted to a floor module of the car in an easy and cost-effective way. This is achieved in that the bracket assembly comprises two separate brackets. By using two separate brackets, a joint that is stiff in the roll direction of the car, i.e. is torsional stiff, is provided for. By having two separate brackets, the individual brackets can be adjusted to the side module of the car body, such that both brackets bear on the side module in the driving direction of the car. By adjusting the brackets, both brackets can be used in an efficient way in the joint. The advantage of this is that a joint that is stiff but still light is obtained. A further advantage of having two separate brackets is that the joint can be spot-welded which is both a cost-effective and robust joining method. Another advantage of using two separate brackets is that since the brackets can be adjusted to the positions of the corresponding side module member, there will be no strain built into the joint and there is also no risk of misalignment of the side module due to a misaligned mounting bracket. Another advantage of the invention is that the bracket assembly will be stiff enough to be self-supporting, which means that the wheel housing must not be used as an extra stabilising structure. This allows for a lighter and thus cheaper wheel housing.

The bracket assembly is intended to be mounted in the C-ring of the car body, i.e. in the C-pillar region. The same bracket assembly solution, i.e. the use of two separate brackets instead of one single-piece bracket, may be advantageous to use when joining the floor module to a side module also at the A-pillar, B-pillar and D-pillar regions. The same advantages can be achieved also at these locations. The main advantages for using such a bracket assembly at theses locations are that the first and second brackets can be adjusted to fit close to the mounting bracket in the side module and that the joint can be made by spot welding.

The bracket assembly is mounted to a floor module of the car body before the side module is mated to the floor module. During the mating of the floor and side modules, the bracket assembly can be adjusted so that both brackets bear on corresponding attachment surfaces of the side module.

An inventive method for mounting a car body side module to a floor module using a bracket assembly, comprises the steps of joining the lower attachment section of the bracket assembly to the floor module of the car body, the step of mating the side module to the floor module, and the step of joining the upper attachment section of the bracket assembly to the side module of the car body. The advantage of this method is that the bracket assembly can be adjusted to the side module in an easy way, which simplifies the joining of the side module to the floor module. Since -spot- welding can be used for the joint, a cost-effective method is obtained. The adjustment of the brackets can be performed at the same time as the spot-welding.

### BRIEF DESCRIPTION OF DRAWINGS

The invention will be described in greater detail in the following, with reference to the embodiments that are shown in the attached drawings, in which
- Fig. 1: shows a perspective view of a bracket assembly according to the invention,
- Fig. 2: shows a perspective view of a bracket assembly according to the invention mounted to the floor module of a car body,
- Fig. 3: shows a perspective view of a bracket assembly according to the invention mounted to the floor module and the side module of a car body, and
- Figs. 4a-4c: shows a schematic cross-section of the positioning of the side member to the bracket assembly according to the invention.

### EMBODIMENTS OF THE INVENTION

The embodiments of the invention with further developments described in the following are to be regarded only as examples and are in no way to limit the scope of the protection provided by the patent claims. The bracket assembly described below is adapted to be mounted on the right side of the vehicle, seen in the driving direction of the vehicle. Thus, only a bracket assembly for the right side of the car is described. A similar, but mirror-inverted bracket assembly adapted to be mounted on the left side of the vehicle is likewise comprised in the description.

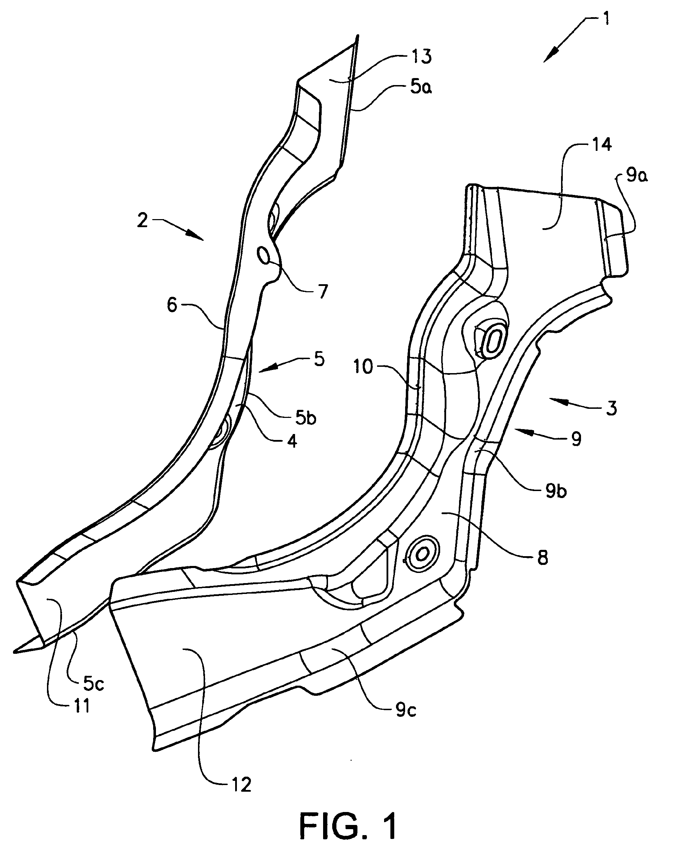

Fig. 1 shows an example of a bracket assembly according to the invention. The bracket assembly is adapted to be mounted in a car body for a station wagon type car. The bracket assembly is to be mounted in the C-ring in order to connect the stabilising structure of the floor module with the stabilising structure of the side module. The floor module is often referred to as the lower body and the side module is often referred to as the upper body.

The bracket assembly is used to stabilise the body. The bracket assembly is optimised to be stiff in the γ-direction, i.e. perpendicular to the driving direction of the vehicle, and at the same time to be weak in the x-direction, i.e. along the driving direction of the vehicle. With a bracket assembly that is stiff in the γ-direction, the body stiffness of the vehicle is improved. With a bracket assembly that is weak in the x-direction, the mating of the upper body to the lower body is facilitated.

The bracket assembly 1 comprises a front bracket 2 and a rear bracket 3. The front bracket 2 comprises a longitudinal, substantially flat main portion 4. The shape of the main portion is adapted to the mounting position. In this example, the shape is somewhat L-shaped with the outer edge 5 following the shape of the car body, with an upper edge 5a following the side module, a central edge 5b following the shape of the wheel housing and a lower edge 5c that is adapted to the mounting bracket of the floor module. The outer edge is provided with a bent outer rim. The rim may be perpendicular or may have another angle, depending on where the rim is situated. The rim 5c may e.g. have an angle that is adapted to follow the mounting bracket of the floor module. The inner edge 6 is adapted to the interior packing of the vehicle and is likewise provided with a perpendicular rim. The outer and inner rims may be bent in the same or different directions with regards to the main portion.

The purpose of the rims is at one hand to stabilise the bracket somewhat and on the other hand to comprise a possibility to fasten other parts of the vehicle, e.g. interior trim part or the like. The inner edge rim comprises in this example a mounting hole 7.

The rear bracket 3 comprises a longitudinal, substantially flat main portion 8. The shape of the main portion is adapted to the mounting position. In this example, the shape is somewhat L-shaped with the outer edge 9 following the shape of the car body, with an upper edge 9a following the side module, a central edge 9b following the shape of the wheel housing and a lower edge 9c that is adapted to the mounting bracket of the floor module. The outer edge is provided with a perpendicular outer rim. The inner edge 10 is adapted to the interior packing of the vehicle and is likewise provided with a perpendicular rim. The outer and inner rims may be bent in the same or different directions with regards to the main portion.

The outer edges 5b, 9b of the brackets are shaped so that the shape follows the wheel housing of the body without the brackets touching the wheel housing when the brackets are mounted in the car body. By adapting the brackets such that they do not bear on the wheel housing when they are mounted and such that they are not intended to be mounted to the wheel housing, the wheel housing can be designed only as a protective cover. In this way, the wheel housing does not have to carry any load and does not have to help stabilising the joint between the floor module and the side module. This allows the wheel housings to be less rigid, which saves weight and cost.

The main portion of the front bracket 2 comprises a lower attachment section 11 and an upper attachment section 13. The main portion of the rear bracket 3 comprises a lower attachment section 12 and an upper attachment section 14. The lower attachment sections are adapted to be fixedly attached to the load carrying structure of the floor module. The upper attachment sections are adapted to be fixedly attached to a load carrying bracket of the side module. By using only attachment sections in the main portions of the brackets and not on the rims, the joints will be mainly in a plane substantially perpendicular to the driving direction of the car. The joints will thus be exposed mainly to shearing strains when the car rolls. The joints are preferably made by spot welding. There are several advantages of using spot welding for the joints. Spot welding is a cheap and time-efficient joint method, spot welds are well adapted to carry shearing strain and the brackets may be slightly bent into the prosper position by the spot weld head when the spot welds are applied.

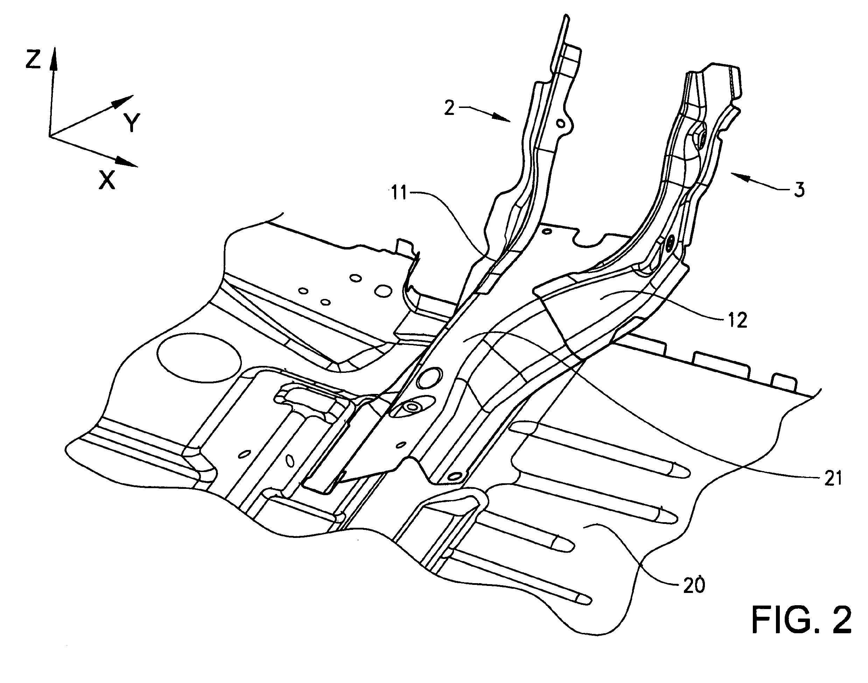

Fig. 2 shows a perspective view of a part of the floor module 20 with the bracket assembly 1, i.e. brackets 2, 3, joined to the lower floor bracket 21. In Fig. 2, a system of coordinates is also shown to facilitate the description of the directions referred to for the car body. The x-direction is in the front-rear direction, i.e. the driving direction, of the car. The y-direction is in the side-side direction, i.e. perpendicular to the x-direction, of the car and the z-direction is in the floor-roof direction, i.e. the vertical direction, of the car.

The plane in which the joints connecting the bracket assembly with the load carrying bracket of the side module are provided is said to be substantially perpendicular to the driving direction of the car. This means that the joint plane is principally in the y-z plane. It is however not practical, due both to tolerances and manufacture, to provide a joint plane exactly in the y-z plane. The joint plane may especially be angled somewhat with respect to the z-direction. With respect to the z-direction, the joint plane may vary with up to 20 degrees. With respect to the y-direction, the joint plane may vary with up to 10 degrees. A plane following these measures is to be understood as being substantially perpendicular to the driving direction of the car, i.e. to the x-direction.

A conventional bracket for the connection of the floor module to a side module is normally U-shaped as described above. There are several disadvantages of having a U-shaped connection bracket of some sort to join the floor module to a side module. One disadvantage is that the bracket is stiff in both the x-direction and in the y-direction. The main purpose of the C-ring is to improve the torsional or roll stiffness of the body. For this reason, the bracket should be stiff in the y-direction when mounted in the car body. Having a bracket that is also stiff in the x-direction will practically not improve the roll stiffness of the car body. The disadvantage of having a bracket that is stiff in the x-direction is on the one hand that the extra material adds weight to the car body, and on the other hand that the mounting of the side module to the floor module will be much more difficult. This leads to a rather poor and weak connection, which has to be over-dimensioned in order to meet the required specifications. This will be explained more thorough below.

In production, the floor module is assembled and thereafter, the preassembled side module is joined to the floor module. Since there are inherently some tolerance mismatch between the load carrying structure of the floor module and the load carrying structure of the side module, due e.g. to tolerances in the parts of the side module and to the positioning of the parts on the side module, it will be difficult to have a close fit between the load carrying structure of the floor module and the load carrying structure of the side module. In a conventional solution, in which a U-profile bracket is used as a connecting bracket mounted in the floor module, and the corresponding bracket on the side module is also a U-profile bracket, it will not be possible for both legs or flanges of the two corresponding brackets to bear on each other at the same time. In some solutions, the legs are consequently deformed in order to bear on both corresponding legs at the same time. The deformation may be done at the same time as the legs are joined, e.g. by screwing the legs together. The deformation will at the same time build in tension in the joint. In other solutions, only the web or the centre of the brackets will bear on each other. The centre sections may then be joined together, e.g. by welding. In both these solutions, the bracket joint will not alone create a sufficiently stiff and rigid joint. In these solutions, at least one or often both brackets are welded to the wheel housing in order to obtain a sufficiently stiff joint.

With the inventive bracket solution, a bracket assembly is provided which is sufficiently stiff in the y-direction and at the same time is relatively weak in the x-direction. This allows the bracket assembly to be adjusted in the x-direction in order to fit to the mounting bracket of the side module of the body. The two brackets in the bracket assembly will resemble a box-type structure when the bracket assembly is mounted to the body, giving a stiff and rigid joint. Since the brackets are adjusted before the brackets are joined to the corresponding mounting bracket, the resulting joints will be stress-free.

The assembly of a side module of a car body to the floor module using the inventive bracket assembly will now be described. First, the lower attachment sections 11, 12 of the front and the rear bracket are attached to a bracket of the load carrying structure of the floor module. This load carrying structure comprises a cross beam applied underneath the floor and a lower floor bracket 21 fixedly attached to the floor and the cross beam, e.g. by welding. The front bracket 2 is joined to the lower floor bracket 21 by spot welding the lower attachment section 11 to the lower floor bracket by using a suitable number of weld spots. The joint is only made in one direction, by welding in a plane substantially perpendicular to the driving direction of the vehicle, i.e. in a plane passing through the y-direction. In this way, a joint that is stiff and rigid in the y-direction is obtained. The rims of the edges 5, 6 of the front bracket are not used in the joint.

The rear bracket 3 is joined to the lower floor bracket 21 in the same way as the front bracket 2, by spot welding the lower attachment section 12 to the lower floor bracket by using a suitable number of weld spots. The joint is only made in one direction. In the shown example, this direction is not completely parallel to the mounting direction of the front bracket due to design reasons. In this way, a joint that is stiff and rigid substantially in the y-direction is likewise obtained. The rims of the edges 9, 10 of the rear bracket are not used in the joint.

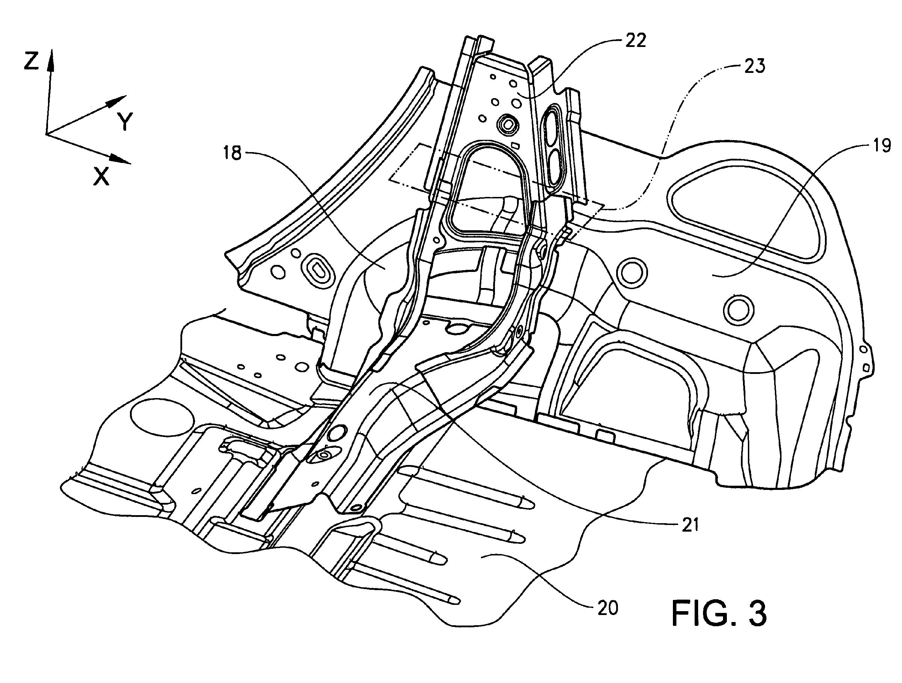

Fig. 3 shows a perspective view of the floor module with the side module 19 of the car positioned to the floor module 20. The side modules of the car body comprises among others the wheel housing 18 and the mounting side bracket 22. The side module is positioned so that the mounting side bracket 22 meets the bracket assembly, which is mounted to the floor module. The mating of the side module to the floor module is done in the y-direction. The front and the rear bracket will extend upwards from the floor components. The upper attachment sections 13, 14 of the brackets are adapted to achieve a close fit to the mounting side bracket 22 of the side module. The side module is positioned to the floor module using a reference point so that the side module obtains the proper position in relation to the floor module. Because the brackets 2, 3 are weak in the x-direction, they will adjust to the mounting side bracket without putting any stress on the side module. A conventional U-profile bracket that is stiff in the x-direction will not adapt to a mounting bracket easily, thus there will be strains between the floor module and the side module, and the side module may even misalign.

After the side module is positioned, the bracket assembly is joined to the mounting side bracket. The joints are preferably made by spot welding. Since the front and rear brackets are not connected with a web as a conventional U-profile bracket, and since there is an opening in the mounting side bracket, the spot weld head can easily reach the sides of the brackets, i.e. an inner side of the mounting side bracket and the upper attachment section of each bracket in the bracket assembly. First, the front bracket may be joined to the front section of the mounting side bracket. This is done by using a sufficient number of spot welds. Thereafter, the rear bracket is joined to the rear section of the mounting side bracket, also by using a sufficient number of spot welds. The spot weld head will press the brackets against each other so that the brackets bear on each other before the joint is completed. Since the joint is to be stiff only in the y-direction, the rims of the brackets may, but must not, bear on the mounting bracket. There will be no welds on the rims.

The brackets 2, 3 of the bracket assembly are positioned with a certain distance between them in the x-direction. This distance is determined by design criteria, and is chosen so that a rigid boy structure is achieved when the bracket assembly is mounted. Another design criterion for the distance is to provide room between the brackets for a spot weld head, so that the brackets can be spot welded to the load carrying structure of the side module in the production plant. It is possible to join the brackets to the side module by other means, e.g. screws or arc welding, but the use of spot welding is preferred.

In this way, a stiff joint is achieved between the floor module and the side module of the car body. The joint will carry loads in the y-direction, and will thus help the body to obtain a torsional stability. All spot welds are applied in a plane substantially perpendicular to the driving direction of the car, i.e. substantially in the y-z plane, which means that the forces in the y-direction will mainly expose the joints with shearing strain. Spot welds are well suited to carry shearing strain and less suited to carry peel and tension loads.

The outer and inner side portions of the brackets will help to strengthen the brackets in the z-direction so that the brackets will not bend or deform when forces in the z-direction are applied.

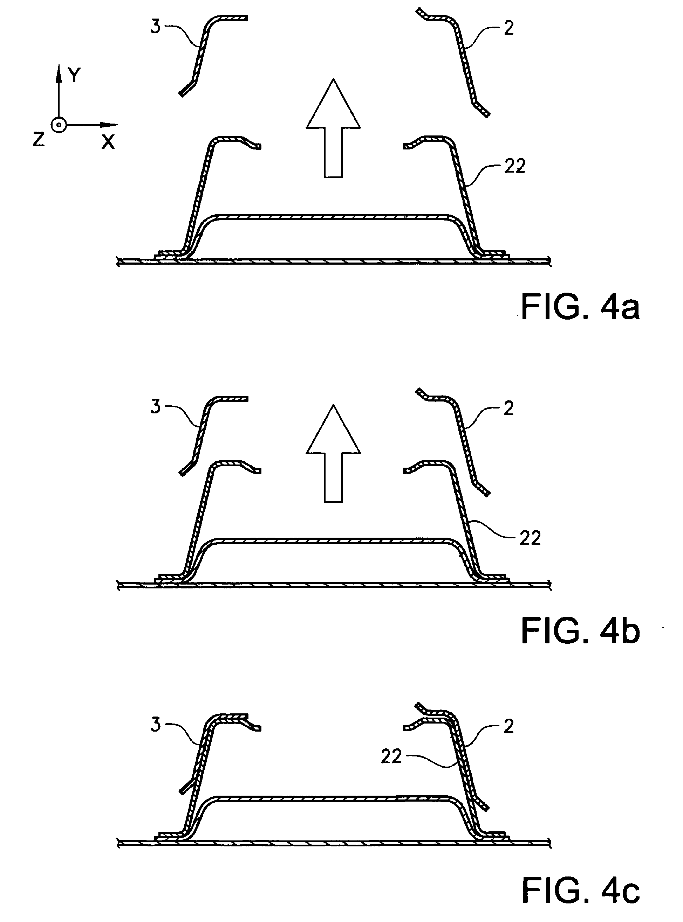

The mounting process of the side module to the floor module is shown in a schematic way in Figs. 4a - 4c. The figures show the brackets in a cross-section of the upper attachment sections in an x-y plane 23. In fig. 4a, the side module of the body with the mounting side bracket is positioned next to the floor module.

In Fig. 4b, the side module is moved in the y-direction towards the floor module. Since the bracket assembly, i.e. the front and the rear brackets, are weak in the x-direction, they can adjust to the actual position of the mounting side bracket. The actual position of the mounting side bracket may vary somewhat due to tolerances in the different parts of the side module and also due to tolerances of the assembly of the side module. At the same time, also the position of the bracket assembly, i.e. the front and the rear brackets, may vary due to tolerances of the parts of the floor module and to tolerances in the assembly of the floor module. With conventional U-profile brackets, the brackets will not be able to adjust to each other. With the inventive bracket assembly, the front bracket may deflect somewhat in the x-direction in order to adjust to the mounting side bracket. The rear bracket may also deflect somewhat in order to adjust to the mounting side bracket.

In Fig. 4c, the side module is positioned to the floor module. In the shown figure, the front and rear bracket both bear on the mounting side bracket. There may still be a slight misalignment of the brackets in the y-direction, but since there will be no joints in this direction, this misalignment is of no importance. It is possible to adapt the brackets, i.e. the tolerances, so that they are mounted such that they will always deflect somewhat to the mounting side bracket when the side module is positioned to the floor module. However, they do not have to bear on the mounting side bracket when the side module is positioned. If one or both brackets do not bear on the mounting side bracket, they will be pressed towards the mounting side bracket by the spot weld head during the spot welding process.

The invention is not to be regarded as being limited to the embodiments described above, a number of additional variants and modifications being possible within the scope of the subsequent patent claims.

### REFERENCE SIGNS

- 1 :: Bracket assembly
- 2:: Front bracket
- 3:: Rear bracket
- 4:: Front main portion
- 5a - c:: Outer edge
- 6:: Inner edge
- 7:: Mounting hole
- 8:: Rear main portion
- 9a - c:: Outer edge
- 10:: Inner edge
- 11:: Lower attachment section
- 12:: Lower attachment section
- 13:: Upper attachment section
- 14:: Upper attachment section
- 18:: Wheel housing
- 19:: Side module
- 20:: Floor module
- 21:: Lower floor bracket
- 22:: Mounting side bracket
- 23:: Cross-section plane

## Claims

1. Bracket assembly (1) for a passenger car, comprising a lower attachment section (11, 12) adapted to be fixedly joined to the load carrying structure of the floor module (20) of the car body and an upper attachment section (13, 14) adapted to be fixedly joined to a load carrying bracket of the side module (19) of the car body, where the upper attachment section (13, 14) is adapted to be joined to the load carrying bracket of the side module (19) by joints in a plane substantially perpendicular to the driving direction of the car, **characterized in that** the bracket assembly comprises a front bracket (2) and a rear bracket (3), where each bracket (2, 3) consists of a substantially flat main portion (4, 8) with outer edges (5, 9) and inner edges (6, 10) and where the lower attachment sections (11, 12) and the upper attachment sections (13, 14) are arranged on the main portions (4, 8) of each bracket (2, 3).

2. Bracket assembly according to claim 1, **characterized in that** the bracket assembly (1) is adapted to be joined to the side module (19) by spot welding.

3. Bracket assembly according to claim 1 or 2, **characterized in that** the front (2) and rear (3) bracket each comprise an outer edge (5, 9) and an inner edge (6, 10), where the edges are provided with rims that are perpendicular to the main portions (4, 8) of the brackets.

4. Bracket assembly according to any of the preceding claims, **characterized in that** the front bracket (2) and the rear bracket (3) are longitudinal shaped.

5. Floor module (20) for a wagon type passenger car, comprising a plurality of bracket assemblies according to any of claims 1 to 4.

6. Floor module according to claim 5, **characterized in that** each bracket assembly (1) is fixedly attached to a lower floor bracket (21) of the floor module.

7. Floor module according to claims 6, **characterized in that** the bracket assembly is attached to the lower floor bracket by spot-welding.

8. Vehicle, comprising a floor module according to any of claims 5 to 7.

9. Method of mounting a car body side module to a floor module using a bracket assembly according to claims 1 to 4, comprising the steps of:
- joining the lower attachment section (11, 12) of the bracket assembly to the load carrying structure of the floor module of the car body,
- mating the side module to the floor module, and
- joining the upper attachment section (13, 14) of the bracket assembly to the load carrying bracket of the side module of the car body by joints in a plane substantially perpendicular to the driving direction of the car.

10. Method according to claim 9, wherein the joining of the bracket assembly to the floor module and/or the side module is made by spot welding.

11. Method according to claims 9 or 10, further comprising the step of adjusting the front and/or rear bracket depending on the position of the side module.

## Patentansprüche

1. Trägerverband (1) für einen Personenwagen, umfassend einen unteren Befestigungsabschnitt (11, 12), angepasst, um fest mit der lasttragenden Struktur des Bodenmoduls (20) der Karosserie verbunden zu sein, und einen oberen Befestigungsabschnitt (13, 14), angepasst, um fest mit einem lasttragenden Träger des Seitenmoduls (19) der Karosserie verbunden zu sein, wobei der obere Befestigungsabschnitt (13, 14) angepasst ist, um über Verbindungen mit dem lasttragenden Träger des Seitenmoduls (19) verbunden zu sein, in einer zur Fahrtrichtung des Wagens im Wesentlichen senkrechten Ebene,
**dadurch gekennzeichnet, dass**
der Trägerverband einen vorderen Träger (2) und einen hinteren Träger (3) umfasst, wobei jeder Träger (2, 3) aus einem im Wesentlichen flachen Hauptabschnitt (4, 8) mit äußeren Rändern (5, 9) und inneren Rändern (6, 10) besteht und wobei die unteren Befestigungsabschnitte (11, 12) und die oberen Befestigungsabschnitte (13, 14) an den Hauptabschnitten (4, 8) eines jeden Trägers (2, 3) angeordnet sind.

2. Trägerverband gemäß Anspruch 1, **dadurch gekennzeichnet, dass** der Trägerverband (1) angepasst ist, um mit dem Seitenmodul (19) über Punktschweißen verbunden zu sein.

3. Trägerverband gemäß Anspruch 1 oder 2, **dadurch gekennzeichnet, dass** der vordere (2) und hintere (3) Träger jeweils einen äußeren Rand (5, 9) und einen inneren Rand (6, 10) umfasst, wobei die Ränder Kanten aufweisen, die rechtwinklig zu den Hauptabschnitten (4, 8) der Träger sind.

4. Trägerverband gemäß einem der vorstehenden Ansprüche, **dadurch gekennzeichnet, dass** der vordere Träger (2) und der hintere Träger (3) länglich geformt sind.

5. Bodenmodul (20) für einen Kombiwagenartigen Personenwagen, eine Vielzahl von Trägerverbänden gemäß einem der Ansprüche 1 bis 4 umfassend.

6. Bodenmodul gemäß Anspruch 5, **dadurch gekennzeichnet, dass** jeder Trägerverband (1) fest mit einem unteren Bodenträger (21) des Bodenmoduls verbunden ist.

7. Bodenmodul gemäß Anspruch 6, **dadurch gekennzeichnet, dass** der Trägerverband mit dem unteren Bodenträger über Punktschweißen befestigt ist.

8. Wagen, ein Bodenmodul gemäß einem der Ansprüche 5 bis 7 umfassend.

9. Verfahren zum Anbringen eines Karosserieseitenmoduls an einem Bodenmodul unter Verwendung eines Trägerverbands gemäß einem der Ansprüche 1 bis 4, die Schritte umfassend:
- Verbinden des unteren Befestigungsabschnitts (11, 12) des Trägerverbands mit der lasttragenden Struktur des Bodenmoduls der Karosserie,
- Zusammenbringen des Seitenmoduls mit dem Bodenmodul, und
- Verbinden des oberen Befestigungsabschnitts (13, 14) des Trägerverbands mit dem lasttragenden Träger des Seitenmoduls der Karosserie über Verbindungen, in einer zur Fahrtrichtung des Wagens im Wesentlichen rechtwinkligen Ebene.

10. Verfahren gemäß Anspruch 9, wobei das Verbinden des Trägerverbands mit dem Bodenmodul und/oder dem Seitenmodul über Punktschweißen durchgeführt wird.

11. Verfahren gemäß Anspruch 9 oder 10, des Weiteren den Schritt umfassend, Justierten der vorderen und/oder hinteren Träger abhängig von der Position des Seitenmoduls.

## Revendications

1. Ensemble de support (1) pour une voiture de passagers, comprenant une section de fixation inférieure (11, 12) adaptée pour être assemblée de manière fixe à la structure de support de charge d'un module de plancher (20) du corps de voiture et une section de fixation supérieure (13, 14) adaptée pour être assemblée de manière fixe à un support porteur de charge du module latéral (19) du corps de voiture, dans lequel la section de fixation supérieure (13, 14) est adaptée pour être assemblée au support porteur de charge du module latéral (19) par des joints dans un plan sensiblement perpendiculaire à la direction d'entraînement de la voiture, **caractérisé en ce que** l'ensemble de support comprend un support avant (2) et un support arrière (3), dans lequel chaque support (2, 3) se compose d'une partie principale sensiblement plate (4, 8) avec des bords externes (5, 9) et des bords internes (6, 10) et dans lequel les sections de fixation inférieures (11, 12) et les sections de fixation supérieures (13, 14) sont agencées sur les parties principales (4, 8) de chaque support (2,3).

2. Ensemble de support selon la revendication 1, **caractérisé en ce que** l'ensemble de support (1) est adapté pour être assemblé au module latéral (19) par soudage par points.

3. Ensemble de support selon la revendication 1 ou 2, **caractérisé en ce que** les supports avant (2) et arrière (3), comprennent chacun un bord externe (5, 9) et un bord interne (6, 10), dans lequel les bords sont munis de collerettes qui sont perpendiculaires aux parties principales (4, 8) des supports.

4. Ensemble de support selon l'une quelconque des revendications précédentes, **caractérisé en ce que** le support avant (2) et le support arrière (3) sont de forme longitudinale.

5. Module de plancher (20) pour une voiture à passagers de type wagon, comprenant une pluralité d'ensembles de support selon l'une quelconque des revendications 1 à4.

6. Module de plancher selon la revendication 5, **caractérisé en ce que** chaque ensemble de support (1) est fixé de manière fixe à un support de plancher inférieur (21) du module de plancher.

7. Module de plancher selon la revendication 6, **caractérisé en ce que** l'ensemble de support est fixé au support de plancher inférieur par soudage par points.

8. Véhicule, comprenant un module de plancher selon l'une quelconque des revendications 5 à 7.

9. Procédé pour monter un module latéral de corps de voiture sur un module de plancher en utilisant un ensemble de support selon les revendications 1 à 4, comprenant les étapes consistant à :
assembler la section de fixation inférieure (11, 12) de l'ensemble de support sur la structure de support de charge du module de plancher du corps de voiture,
coupler le module latéral au module de plancher, et
assembler la section de fixation supérieure (13, 14) de l'ensemble de support sur le support porteur de charge du module latéral du corps de voiture par des joints dans un plan sensiblement perpendiculaire au sens de la marche de la voiture.

10. Procédé selon la revendication 9, dans lequel l'étape consistant à assembler l'ensemble de support au module de plancher et/ou au module latéral est réalisée par soudage par points.

11. Procédé selon la revendication 9 ou 10, comprenant en outre l'étape consistant à ajuster le support avant et/ou arrière en fonction de la position du module latéral.
